(19) **Europäisches Patentamt / European Patent Office / Office européen des brevets**

(11) **EP 1 600 771 B1**

(12) **EUROPEAN PATENT SPECIFICATION**

(45) Date of publication and mention
of the grant of the patent:
**07.02.2007 Bulletin 2007/06**

(51) Int Cl.:
*G01N 30/00* *(2006.01)*   *G01N 27/26* *(2006.01)*

(21) Application number: **04106605.1**

(22) Date of filing: **15.12.2004**

(54) **Peak pattern calibration**

Kalibration von Peak-Pattern

Calibration de structures en pics

(84) Designated Contracting States:
**CH DE FR GB LI**

(43) Date of publication of application:
**30.11.2005 Bulletin 2005/48**

(60) Divisional application:
**05111587.1 / 1 669 753**

(73) Proprietor: **Agilent Technologies, Inc.**
**Santa Clara, CA 95051 (US)**

(72) Inventor: **JAEGER, Rainer**
**76131, Karlsruhe (DE)**

(74) Representative: **Barth, Daniel Mathias et al**
**c/o Agilent Technologies Deutschland GmbH,**
**Patentabteilung,**
**Herrenbergerstrasse 130**
**71034 Böblingen (DE)**

(56) References cited:
**US-A- 5 119 315**

- **JOHNSON K J ET AL: "High-speed peak matching algorithm for retention time alignment of gas chromatographic data for chemometric analysis" JOURNAL OF CHROMATOGRAPHY A, ELSEVIER, AMSTERDAM, NL, vol. 996, no. 1-2, 9 May 2003 (2003-05-09), pages 141-155, XP004427349 ISSN: 0021-9673**
- **MALMQUIST G ET AL: "Alignment of chromatographic profiles for principal component analysis: a prerequisite for fingerprinting methods" JOURNAL OF CHROMATOGRAPHY A, ELSEVIER, AMSTERDAM, NL, vol. 687, no. 1, 9 December 1994 (1994-12-09), pages 71-88, XP004022850 ISSN: 0021-9673**
- **PARRISH M E ET AL: "Computer-Enhanced High-Resolution Gas Chromatography for the Discriminative Analysis of Tobacco Smoke" ANAL. CHEM., vol. 53, no. 6, May 1981 (1981-05), pages 826-831, XP002339877**

## Description

BACKGROUND ART

The present invention relates to a method for calibrating a sample peak pattern, to a data analysis unit adapted for calibrating a sample peak pattern with regard to a first and a second calibration peak pattern, and to a sample analysis unit.

There exist a variety of different techniques for analyzing compounds of an unknown sample. In order to analyze the unknown sample, a sample peak pattern might be acquired, with the peaks representing compounds of the unknown sample. However, before the sample peak patterns can be used for further analysis, they have to be calibrated with regard to calibration samples comprising a set of known components. For example, in the field of DNA analysis or protein analysis, calibration samples comprising a set of well-known DNA fragments or proteins are employed. Before the calibration can be performed, the sample peak pattern has to be aligned relative to the one or more calibration peak patterns. The accuracy of the calibration strongly depends on the accuracy of this alignment step.

[0002a] US 5,119,315 A discloses a method of correlating a record of sample data with a record of reference data.

DISCLOSURE OF THE INVENTION

It is an object of the invention to provide an improved calibration of a sample peak pattern with regard to at least one calibration peak pattern. The object is solved by the independent claim(s). Preferred embodiments are shown by the dependent claim(s).

According to embodiments of the present invention, a method for calibrating a sample peak pattern with regard to a first and a second calibration peak pattern is provided. The respective peak patterns are acquired at different times. The calibration peak patterns each comprise a first reference peak and at least one second reference peak, and the sample peak pattern comprises a first reference peak, at least one of the second reference peaks, and any number of peaks of species of interest. The method comprises a first step of aligning at least one second reference peak of the first calibration peak pattern with at least one corresponding second reference peak of the second calibration peak pattern. The method further comprises a step of performing an interpolation of the respective positions of the first reference peak in the first and the second calibration peak pattern, in order to derive a time dependence of the first reference peak's position. The method further comprises a step of aligning the sample peak pattern relative to at least one of the calibration peak patterns in a way that

- the sample peak pattern's first reference peak is aligned with an interpolated position of the first reference peak according to the time dependence determined in the preceding step, and that

- at least one of the sample peak pattern's second reference peaks is aligned with at least one corresponding second reference peak of the calibration peak patterns.

The positions of peaks related to different compounds might be subjected to different types of time dependence. There might be a slight variation of the measuring conditions as a function of time. Because of the different chemical structure of the samples' compounds, a small variation of the measuring conditions may affect the compounds in different ways. Accordingly, the peaks of the sample peak pattern and of the calibration peak patterns might be subjected to different types of time dependence. In particular, a relative time drift of one peak relative to other peaks might be observed.

The calibration peak patterns each comprise a first reference peak and one or more second reference peaks. In addition to peaks related to species of interest, the sample peak pattern also comprises the first reference peak and at least one of the second reference peaks. If there is a time drift of the first reference peak's position relative to the at least one second reference peak's position, this time drift can be derived from the two calibration peak patterns, which have been acquired at different times. One or more of the second reference peaks of the first calibration peak pattern are aligned with corresponding second reference peaks of the second calibration peak pattern. Then, the first reference peak's position is known at two different times, and a time dependence of the first reference peak's position can be derived there from. Now, the time dependence of the first reference peak's position is known.

Next, the sample peak pattern is aligned relative to at least one of the calibration peak patterns. The point in time when the sample peak pattern has been acquired is known. From the known time dependence of the first reference peak's position, it is possible to derive an interpolated position of the first reference peak that corresponds to the point in time when the sample peak pattern has been measured. Now, the measured position of the sample peak pattern's first reference peak can be aligned with this interpolated position derived from the first and the second calibration peak pattern. Additionally, at least one of the sample peak pattern's second reference peak is aligned with at least one corresponding second reference peak of one of the calibration peak patterns.

By considering the relative time drift between different reference peaks of the calibration peak pattern, it is possible to perform a high-precision alignment of the sample peak pattern's reference peaks relative to the calibration peak patterns' reference peaks. The alignment step is a necessary prerequisite for subsequent calibration steps. For this reason, the precision of a subsequent calibration is also improved.

According to a preferred embodiment, for determining the time dependence of the first reference peak's position, a linear interpolation between the first reference peak's position in the first and in the second calibration peak pattern is performed. In general, the first reference peak's time drift is substantially a linear time drift.

According to a preferred embodiment, the sample peak pattern is acquired by analyzing a sample of interest. In addition to various species of interest, the sample of interest comprises a marker and at least one labelled fragment, whereby the sample peak pattern's first reference peak corresponds to the marker, and whereby the one or more second reference peaks of the sample peak pattern correspond to the one or more labelled fragments. It is common practice to add a marker and at least one labelled fragment to a sample of interest, in order to be able to perform a calibration of the obtained sample peak pattern. For example, a rather small molecule might be used as a marker molecule, whereas the labelled fragments are molecules of considerable size. Therefore, the migration behaviour of the marker might differ significantly from the labelled fragments' migration behaviour, and a time drift between the first reference peak and the at least one second reference peaks might be observed.

According to a preferred embodiment, the first and the second calibration peak pattern are acquired by analyzing compounds of a calibration sample, with the calibration sample comprising the marker and a set of labelled fragments. Further preferably, the calibration peak patterns' first reference peak corresponds to the marker, whereas the one or more second reference peaks of the calibration peak patterns relate to the set of labelled fragments.

In a preferred embodiment, a so-called ladder is used as a calibration sample. A ladder is a calibration sample comprising a plurality of well-known components, whereby the name "ladder" is due to the fact that the calibration peak pattern looks like a "ladder" of peaks related to the various components. For example, in the field of DNA analysis and protein analysis, many manufacturer offer ladders for calibration purposes.

In a preferred embodiment, the compounds of the calibration sample and of the sample of interest are separated in a separation flow path. For example, the respective samples may be provided to an input of the separation flow path, and at the separation flow path's outlet, separated compounds of the sample may be obtained as a function of time. The separation flow path might e.g. be implemented as a separation column filled with some kind of packing material. Preferably, one of the following separation techniques is used: electrophoresis, chromatography, electrochromatography.

According to a preferred embodiment, the sample peak pattern and the calibration peak patterns are obtained by detecting fluorescence intensity of compounds that have been separated in a preceding separation flow path. In this embodiment, the marker is a fluorescence marker, and the fragments of the calibration sample are labelled with fluorescence tags. Also the compounds of the sample of interest are labelled with fluorescence tags. Accordingly, the respective peak patterns are acquired by detecting fluorescence intensity as a function of time.

According to another preferred embodiment, the marker emits fluorescence light of a first wavelength, whereas the labelled fragments emit fluorescence light of a second wavelength, which is different from the first wavelength. Some of the available ladders comprise two or more different fluorescence dyes adapted for emitting fluorescence light of two or more different wavelengths. Correspondingly, there exist fluorescence detection units adapted for simultaneously tracking fluorescence intensity at two or more different wavelengths.

According to another preferred embodiment, the sample peak pattern is measured between the first and the second calibration peak pattern. Thus, the interpolation of the first reference peak's position becomes more accurate.

The invention can be partly or entirely embodied or supported by one or more suitable software programs, which can be stored on or otherwise provided by any kind of data carrier, and which might be executed in or by any suitable data processing unit.

BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawing(s). Features that are substantially or functionally equal or similar will be referred to with the same reference sign(s).

Fig. 1 shows a measurement set-up;

Fig. 2 depicts two fluorescence intensity signals related to a calibration sample;

Fig. 3 shows two fluorescence intensity signals related to a sample of interest;

Fig. 4A shows measured peaks in dependence on an absolute time scale;

Fig. 4B shows an alignment of peak patterns according to the prior art;

Fig. 4C shows an alignment of peak patterns according to embodiments of the present invention;

Fig. 5 illustrates a relative time drift of the lower marker peak LM relative to the ladder peaks;

Fig. 6 shows the effects of global alignment and piecewise alignment; and

Fig. 7 depicts how a piecewise alignment is performed.

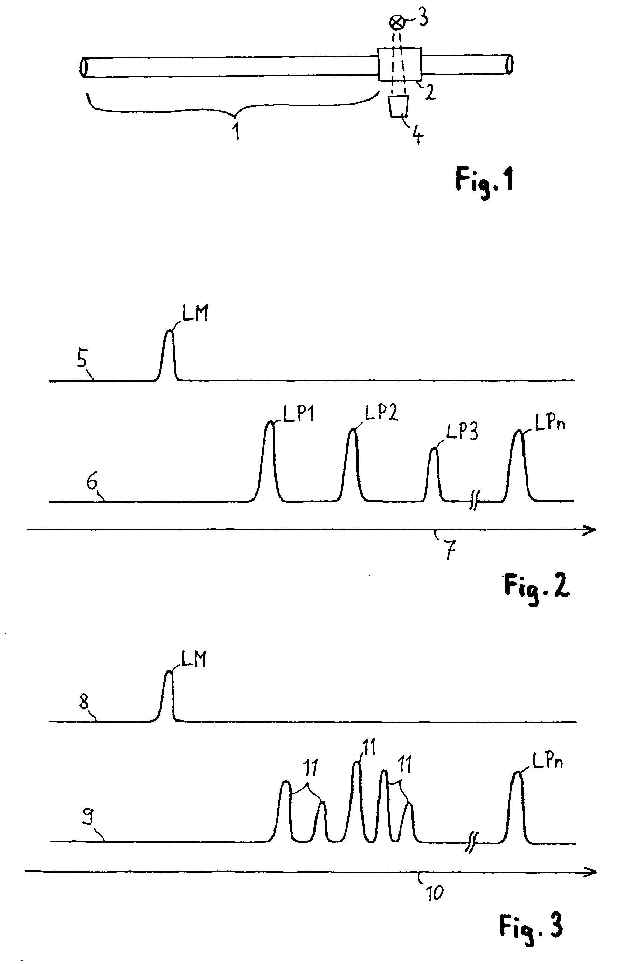

Fig. 1 shows a measurement set-up for separating and analyzing a fluid sample comprising a plurality of different sample compounds. Each of the sample's compounds is characterized by an individual migration time required for travelling through a separation flow path 1. The separation flow path 1 might e.g. be an electrophoresis flow path, a chromatography flow path, or an electrochromatography flow path. At the outlet of the separation flow path 1, a detection cell is located. The detection cell might e.g. be implemented as an fluorescence detection cell 2 comprising a light source 3 and a fluorescence detection unit 4. The fluorescence detection cell 2 is adapted for detecting sample bands of fluorescence labelled species as a function of time.

Before a sample comprising a plurality of unknown species can be analyzed, the measurement set-up shown in Fig. 1 has to be calibrated. For this purpose, there exist a large variety of different calibration samples comprising a set of well-known compounds of different size. These compounds can be separated and analyzed by a measurement set-up as shown in Fig. 1, whereby a characteristic calibration peak pattern is obtained. For each compound of the calibration sample, the calibration peak pattern comprises a respective calibration peak. Because the set of calibration peaks look like a ladder, calibration samples are often referred to as "ladders". A lot of manufacturers produce calibration samples or "ladders" for electrophoresis systems, chromatography systems or electrochromatography systems. In the field of DNA analysis, ladders comprising a set of different DNA fragments are used, whereas in the field of protein analysis, calibration samples comprising a set of different proteins are used.

In case fluorescence detection is used for detecting different species, ladders comprising fragments labelled with fluorescence tags are employed. When the species of the calibration sample are stimulated with incident light, the tags attached to the species emit fluorescence light. There also exist calibration samples or "ladders" comprising a marker that fluoresces at a first wavelength, and a set of labelled fragments that emit fluorescent light at a second wavelength.

Fig. 2 shows two different fluorescence intensity signals 5, 6 as a function of time. The two fluorescence intensity signals 5, 6 have been acquired by detecting fluorescence intensity at two different wavelengths. The signals of Fig. 2 relate to a calibration sample comprising a marker and a set of labelled fragments. The marker is a small dye molecule adapted for emitting red fluorescence light. In general, the labelled fragments are larger in size than the marker. They are labelled with fluorescence tags adapted for emitting green fluorescence light. In addition to the fluorescence intensity signals 5, 6, a time axis 7 is shown. First, the small marker molecules appear at the separation column's outlet, and accordingly, a lower marker peak LM appears in the fluorescence intensity signal 5 related to red fluorescence light. Next, the labelled fragments arrive at the detection cell, whereby small, light fragments migrate through the separation column more quickly than large, heavy fragments. Hence, the fluorescence intensity signal 6 related to green fluorescence light comprises a set of ladder peaks LP1, LP2, LP3, ... LPn, with ladder peak LP1 corresponding to the smallest labelled fragment, and with LPn corresponding to the largest labelled fragment.

After the fluorescence peak pattern of the calibration sample has been acquired, a sample of interest is analyzed. In order to allow for an alignment with the calibration peak pattern, a certain concentration of the marker and a certain concentration of the largest labelled ladder fragment is added to the sample of interest. Then, the compounds of the sample of interest are separated, and the sample bands obtained at the separation column's outlet are analyzed.

Fig. 3 shows two fluorescence intensity signals 8, 9 obtained by analysing the sample of interest. The fluorescence intensity signal 8 relates to red fluorescence light, whereas the fluorescence intensity signal 9 relates to green fluorescence light. Furthermore, a time axis 10 is shown. First, the marker appears at the column's outlet, and a corresponding lower marker peak LM shows up in the fluorescence intensity signal 8. Next, sample bands related to compounds of the sample of interest arrive at the fluorescence detection cell. The sample compounds have been labelled with a fluorescence tag adapted for emitting green fluorescence light. Accordingly, the fluorescence intensity signal 9 comprises peaks 11 that correspond to these sample compounds. At last, the largest labelled fragment appears at the detection cell, and accordingly, the fluorescence intensity signal 9 comprises a ladder peak LPn.

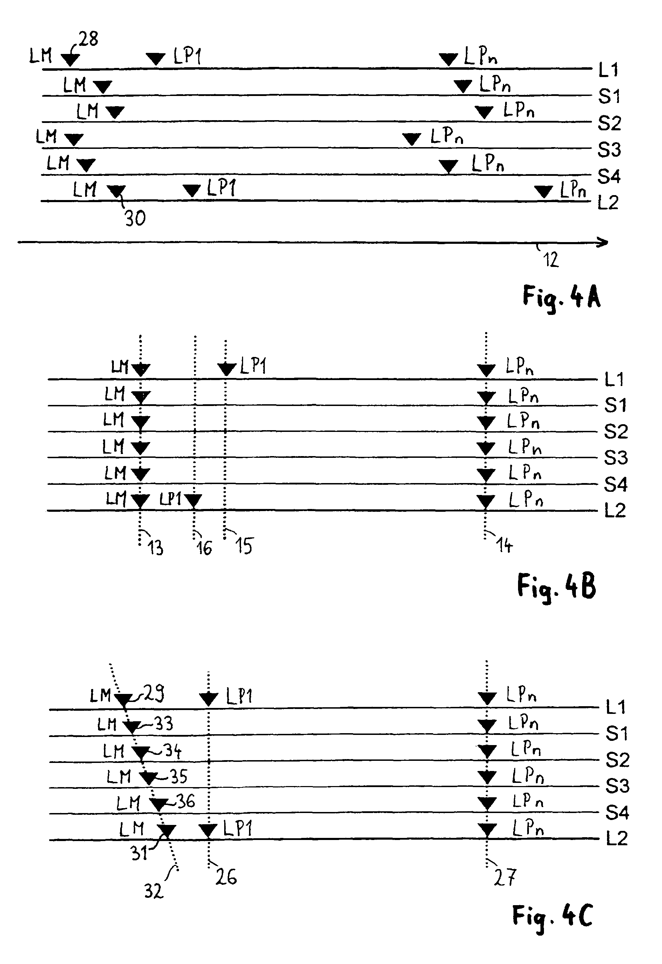

Fig. 4A shows a sequence of measurements comprising both calibration measurements and sample measurements. First, a calibration sample or ladder L1 is analyzed, then, sample peak patterns of samples S1 to S4 are acquired, and at last, a calibration peak pattern of a ladder L2 is measured. Below the measurements, a time axis 12 indicates an absolute time scale that has been used for recording the peak patterns. For each of the two calibration sample measurements L1 and L2, the respective positions of the lower marker peak LM, of the first labelled fragment's peak LP1, and of the last labelled fragment's peak LPn are indicated. For each of the sample measurements S1 to S4, the position of the lower marker peak LM and the position of the last labelled fragment's peak LPn are indicated.

The time axis 12 indicates an absolute time scale that has been used for recording the peak patterns. From Fig. 4A, it can be seen that the absolute time positions of corresponding peaks vary considerably. Furthermore, also the time intervals between the lower marker peak LM and the last labelled fragment's peak LPn vary to some extent. This variation indicates a compression or an expansion of the absolute time scale, which might e.g. be caused by fluctuations of the solvent composition, by chemical modifications of the column's packing material, or by any other changes of the measuring environment.

For these reasons, in order to achieve comparability between the peak patterns, it is necessary to convert the absolute time scale into a relative time scale and to align the peaks of the sample peak pattern relative to the peaks of the calibration peak patterns.

According to a solution of the prior art, which is depicted in Fig. 4B, a first fixed time value 13 is assigned to the lower marker peaks LM of the calibration measurements L1 and L2 and to the lower marker peaks LM of the sample measurements S1 to S4. Furthermore, a second fixed time value 14 is assigned to the respective peaks LPn of the measurements L1, L2, S1 to S4. As a consequence, the positions of the respective lower marker peaks LM are aligned, and the positions of the respective ladder peaks LPn are aligned.

By assigning fixed time values to the peaks LM and LPn of each peak pattern, respectively, a relative time scale is set up for each of the peak patterns L1, S1 to S4, L2. Now, the peaks' absolute time values, which are depicted in Fig. 4A, can be converted into corresponding relative time values of this relative time scale.

However, the prior art solution shown in Fig. 4B has some shortcomings. When converting the absolute time position of peak LP1 of calibration measurement L1 into a corresponding relative time value, a relative time value 15 of peak LP1 is determined. When converting the absolute time value of peak LP1 of calibration measurement L2 into a corresponding relative time value, a relative time value 16 of peak LP1 is obtained. Obviously, the relative time value 16 of peak LP1 derived from calibration measurement L2 does not match with the relative time value 15 obtained from calibration measurement L1.

This means that the ratio $\left(\dfrac{\Delta T_{LM}^{LP1}}{\Delta T_{LP1}^{LPn}}\right)_{L1}$ derived from cal-

ibration measurement L1 differs from the ratio

$\left(\dfrac{\Delta T_{LM}^{LP1}}{\Delta T_{LP1}^{LPn}}\right)_{L2}$ derived from L2:

$$\left(\frac{\Delta T_{LM}^{LP1}}{\Delta T_{LP1}^{LPn}}\right)_{L1} \neq \left(\frac{\Delta T_{LM}^{LP1}}{\Delta T_{LP1}^{LPn}}\right)_{L2}$$

with $\Delta T_{LM}^{LP1}$ denoting the time interval between LM and LP1 according to the absolute time scale of Fig. 4A, and with $\Delta T_{LP1}^{LPn}$ denoting the time interval between LP1 and LPn according to the absolute time scale of Fig. 4A.

This effect is due to a relative time drift between the position of the lower marker peak LM and the positions of the labelled fragments' peaks LP1 to LPn. The fragments are labelled with a fluorescence tag, whereas the marker is a free dye that is not bound to any fragment. When passing through the separation column, the migration behaviour of the free dye differs considerably from the migration behaviour of the labelled fragments.

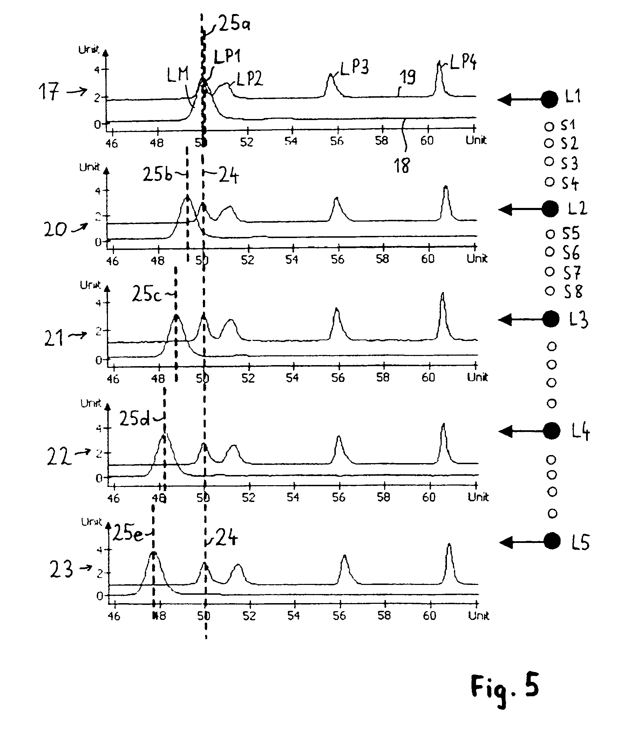

Fig. 5 illustrates the relative time drift of the lower marker peak's position relative to the peak positions of the other ladder peaks. Fig. 5 shows a set of different calibration peak patterns that have been recorded at different points in time. First, the calibration measurement L1 is performed, then, four sample measurements S1 to S4 are acquired, followed by another calibration measurement L2. After the calibration measurement L2 has been carried out, another set of four sample measurements S5 to S8 is performed, followed by a third calibration measurement L3. This sequence of calibration measurements is continued, whereby further calibration measurements L4, L5 are performed. The first diagram 17 of Fig. 5 relates to the calibration measurement L1. The first fluorescence intensity signal 18 comprises a lower marker peak LM, whereas the second fluorescence intensity signal 19 comprises four ladder peaks LP1, LP2, LP3, LP4. The following diagrams 20 to 23 relate to the calibration measurements L2 to L5, respectively. It can be seen that the respective positions of the ladder peaks LP1 to LP4 remain unchanged, whereas there is a time drift of the lower marker peak LM relative to the ladder peaks LP1 to LP4. Relative to the position 24 of ladder peak LP1, the respective positions 25a to 25e of the lower marker peak LM are continuously moving as a function of time.

The relative time drift between the peak positions of the marker on the one hand and the labelled fragments on the other hand has to be taken into account when aligning the peak patterns shown in Fig. 4A. According to embodiments of the present invention, it is proposed to perform the alignment in a way shown in Fig. 4C. In a first step, the first ladder peak LP1 and the last ladder peak LPn of calibration measurement L1 are aligned with the ladder peaks LP1 and LPn of calibration sample L2. This can e.g. be done by assigning a first fixed time value 26 to ladder peak LP1 of calibration measurement L1 and to ladder peak LP1 of calibration measurement L2, and by assigning a second fixed time value 27 to ladder peak LPn of calibration measurement L1 and to ladder peak LPn of calibration measurement L2. As a result of this assignment, peak LP1 of L1 is aligned with peak LP1 of L2, and furthermore, peak LPn of L1 is aligned with peak LPn of L2.

By assigning a first fixed time value to LP1 and a second fixed time value to LPn, both for calibration measurement L1 and for calibration measurement L2, a relative time scale is established. Hence, both for L1 and L2, the absolute time scale, which has been used for measuring the peak patterns, is transformed to a relative time scale.

Using the relative time scale of L1, the absolute time value 28 of the lower marker peak LM shown in Fig. 4A can be converted into a corresponding relative time value 29. Accordingly, the absolute time value 30 of the lower marker peak LM shown in Fig. 4A can be converted into a corresponding relative time value 31.

In general, the relative time value 29 differs from the relative time value 31. However, from these two values, a time drift of the lower marker's peak position relative to the ladder peaks can be derived, preferably by performing a linear interpolation. In Fig. 4C, the linear time drift of the lower marker peak LM is indicated as a straight line 32. Instead of a linear interpolation, a more complex type of interpolation can be used for modeling the lower marker peak's time drift.

As soon as the time dependence of the lower marker's peak position is known, it is possible to determine interpolated relative time values 33, 34, 35, 36 indicating the lower marker's peak position at the respective points in time when the sample measurements S1 to S4 have been performed.

Now, for each of the sample measurements S1 to S4, the absolute time scale shown in Fig. 4A is transformed into a relative time scale in a way that the position of the lower marker peak LM is aligned with a respective one of the interpolated relative time values 33 to 36, and that the position of the ladder peak LPn is aligned with the second fixed time value 27. For each of the sample measurements S1, S2, S3, S4, a relative time scale is established by assigning a respective one of the relative time values 33 to 36 to the lower marker peak LM, and by assigning the second fixed time value 27 to the ladder peak LPn. Thus, the absolute time values are converted into corresponding relative time values, whereby the lower marker peak's time drift is taken into account.

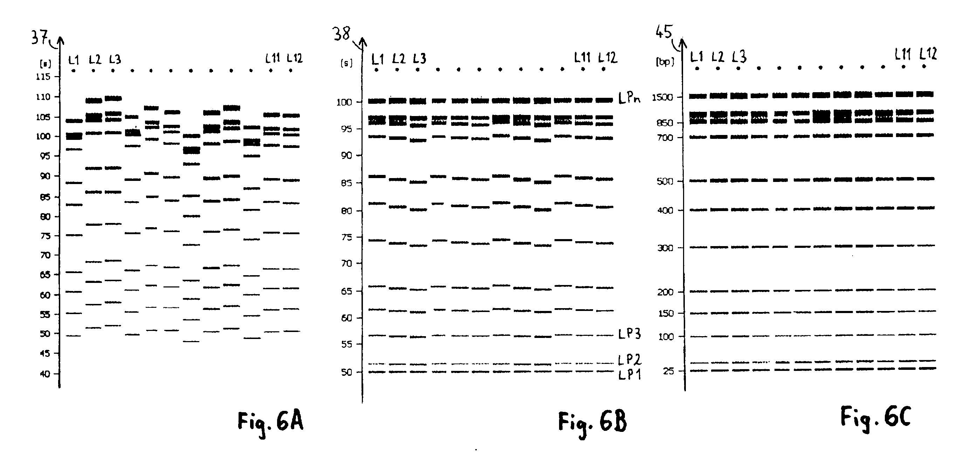

In Fig. 6A, measured time values of the ladder peaks LP1 to LPn are shown before an alignment is performed. The time axis 37 indicates an absolute time scale that has been used when acquiring the data. The data shown in Fig. 6A relates to 12 different calibration measurements L1 to L12.

Fig. 6B shows the same data after an alignment according to Fig. 4C has been performed. On the left side, a time axis 38 indicating a relative time scale is shown, with the relative time scale being determined in accordance with Fig. 4C. For each of the 12 calibration measurements L1 to L12, the respective peak positions of the ladder peaks LP1 to LPn are indicated. From Fig. 6B, it can be seen that both the first ladder peaks LP1 and the last ladder peaks LPn are perfectly aligned, whereas the peak positions of the other ladder peaks LP2 to LP(n-1) may still vary. However, this variation is much smaller in scale than the marker's drift that has been described above. Furthermore, this variation is not related to the different chemical structures of the marker and the labelled fragments, but is rather due to other types of fluctuations of the measuring set-up.

Therefore, in addition to the global alignment shown in Fig. 4C, which is performed as a first step, a subsequent piecewise alignment is carried out.

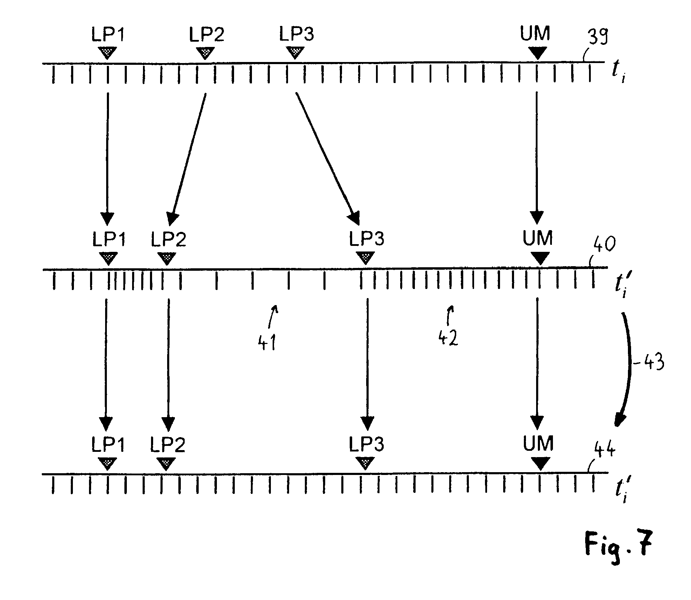

Fig. 7 shows how to perform a piecewise alignment of a calibration peak pattern. The piecewise alignment is performed with regard to a set of reference time values of the ladder peaks LP1 to LPn. For each ladder peak LPi, a reference time value $T'_i$ indicating the ladder peak's reference position is provided, whereby the set of reference time values $T'_i$, $1 \leq i \leq n$ is specified on a relative time scale. The set of reference time values might e.g. be obtained from a manufacturer of a calibration sample. Alternatively, the reference positions of the ladder peaks might be determined by performing a large number of reference measurements of a calibration sample, and by determining average values of the calibration peaks' relative time values.

In the upper part of Fig. 7, a relative time scale 39 is shown, whereby the ladder peaks LP1, LP2, ... LPn are those obtained after a global alignment according to Fig. 4C has been performed. First, a set of time intervals $[T_i; T_{i+1}]$ is defined, with $T_i$ denoting the relative time value of ladder peak LPi, and with $T_{i+1}$ denoting the relative time value of ladder peak LP(i+1). For each of the intervals extending from LPi to LP(i+1), a separate linear transformation is defined in a way that the interval $[T_i, T_{i+1}]$ is mapped to a corresponding target interval $[T'_i, T'_{i+1}]$ of a reference time scale 40. $T'_i$ denotes the reference time value of ladder peak LPi, and $T'_{i+1}$ denotes the reference time value of ladder peak LP(i+1). Thus, a set of (n-1) linear transformations is obtained.

Each of the (n-1) linear transformations might e.g. be defined as:

$$t'_i = scale_i \cdot t_i + bias_i \, ,$$

with $scale_i$ denoting a scaling factor, $bias_i$ denoting an offset, $t_i \in [T_i, T_{i+1}]$ denoting a relative time value according to the relative time scale 39, and with $t'_i \in [T'_i, T'_{i+1}]$ denoting a corresponding relative time value of the reference time scale 40. Each of the (n-1) linear transformations is applied to a corresponding subinterval $[T_i, T_{i+1}]$, $1 \leq i \leq n-1$ of the relative time scale 39. By subjecting the calibration peak pattern to this set of piecewise transformations, each ladder peak LPi is mapped to its reference time value $T'_i$.

When the calibration measurement or the sample measurement are performed, sample values are recorded at a constant rate. Therefore, the spacing between neighboring sample values is constant. However, after the time intervals have been mapped to their corresponding target time intervals, the distances between neighboring sample values are either stretched (41) or compressed (42). Therefore, in a next step, a re-sampling 43 of the sample values is performed. As a result, a re-sampled reference time scale 44 is obtained.

The set of linear transformations derived from the calibration peak pattern can be applied to subsequent sample measurements. A first possibility is to apply the set of transformations as derived from a calibration measurement L1 to the subsequent sample measurements S1 to S4. Another possibility is to consider both the calibration measurement L1 that is performed before the sample measurements S1 to S4 are carried out and the calibration measurement L2 performed after the sample measurement S1 to S4 have been carried out. From L1, a first set of linear transformations is derived, and from L2, a second set of linear transformations is derived. For correcting any one of the sample measurements S1 to S4, e.g. S2, an interpolated set of (n-1) linear transformations is derived from the first and the second set of linear transformations.

In Fig. 6C, the calibration peak patterns L1 to L12 are shown after a piecewise alignment according to Fig. 7 has been performed. It can be seen that an alignment of all the ladder peaks LP1, LP2, ... LPn has been accomplished.

By converting both calibration measurements and sample measurements to a reference time scale, it is possible to assign a common time axis both to the ladder peak patterns and the sample peak patterns. Thus, comparability between different calibration measurements and sample measurements is promoted. Furthermore, instead of a time axis indicating relative time values, both the calibrations peak patterns and the sample peak patterns may be calibrated in terms of base pairs. In particular, a size axis indicating the number of corresponding base pairs may be employed. The processed signals may then be used for further analysis, such as .g. profiling.

**Claims**

1. A method for calibrating a sample peak pattern with regard to a first and a second calibration peak pattern, wherein the respective peak patterns are acquired at different times;
   with the calibration peak patterns each comprising a first reference peak and at least one second reference peak, and with the sample peak pattern comprising the first reference peak, at least one of the second reference peaks, and any number of peaks of species of interest;
   the method comprising the following steps:

   (a) aligning at least one second reference peak of the first calibration peak pattern with at least one corresponding second reference peak of the second calibration peak pattern;
   (b) performing an interpolation of the respective positions of the first reference peak in the first and the second calibration peak pattern, in order to derive a time dependence of the first reference peak's position;
   (c) aligning the sample peak pattern relative to at least one of the calibration peak patterns in a way that

   - the sample peak pattern's first reference peak is aligned with an interpolated position of the first reference peak according to the time dependence determined in step (b), and that
   - at least one of the sample peak pattern's second reference peaks is aligned with at least one corresponding second reference peak of the calibration peak patterns.

2. The method of claim 1, wherein the time dependence of the first reference peak's position is derived by performing a linear interpolation of the respective positions of the first reference peak in the first and the second calibration peak pattern.

3. The method of claim 1 or 2, wherein the sample peak pattern is acquired by detecting compounds of a sample of interest.

4. The method of claim 3, wherein the sample of interest comprises a marker, at least one labelled fragment, and species of interest, wherein the sample peak pattern's first reference peak corresponds to the marker, and wherein the at least one second reference peak of the sample peak pattern corresponds to the at least one labelled fragment.

5. The method of any one of the above claims, wherein the first and the second calibration peak pattern are acquired by detecting compounds of a calibration sample.

6. The method of claim 5, wherein the calibration sample comprises a marker and at least one labelled fragment, wherein the respective first reference peak of the first and the second calibration peak pattern corresponds to the marker, and wherein the at least one second reference peak of the first and the second calibration peak pattern corresponds to the at least one labelled fragment.

7. The method of claim 5 or 6, wherein the calibration sample is a ladder comprising a set of different labelled fragments.

8. The method of any one of the claims 5-7 as dependent on claim 3, wherein the compounds of the calibration sample and of the sample of interest are separated in a separation flow path, the separation flow path being adapted for separating compounds of a fluid sample.

9. The method of claim 8, wherein the separation flow path is one of an electrophoresis flow path, a chromatography flow path, an electrochromatography flow path.

**10.** The method of any one of the above claims, wherein the first calibration peak pattern, the sample peak pattern and the second calibration peak pattern are acquired by detecting fluorescence intensity of compounds.

**11.** The method of claim 4 or 6, wherein the marker is adapted for emitting fluorescent light at a first wavelength, and wherein the labelled fragments are adapted for emitting fluorescent light at a second wavelength.

**12.** The method of any one of the above claims, wherein the first calibration peak pattern is acquired before the sample peak pattern, and wherein the second calibration peak pattern is acquired after the sample peak pattern.

**13.** The method of any one of the above claims, further comprising a step of determining, from at least one of the first and the second calibration peak pattern, a set of linear transformations, said linear transformations being adapted for performing an adjustment of the peak pattern's time scale in a way that the positions of the reference peaks match with reference positions of the reference peaks specified in a reference data set.

**14.** The method of claim 13, wherein, in case a calibration peak pattern comprises n reference peaks, n being a natural number, the determination of the set of linear transformations comprises the following steps:
splitting up the time axis of the calibration peak pattern into a series of n-1 adjacent subintervals, with an $i^{th}$ subinterval ranging from reference peak i to reference peak i+1 of the calibration peak pattern, with i being a natural number, $1 \leq i < n$;
setting up, for each of the n-1 subintervals, a corresponding linear transformation, with the $i^{th}$ linear transformation being adapted for mapping the $i^{th}$ subinterval into a corresponding $i^{th}$ target interval, said $i^{th}$ target interval ranging from the reference position of reference peak i of the reference data set to the reference position of reference peak i+1 of the reference data set.

**15.** The method of claim 13 or 14, wherein a linear transformation is set up as $t' = scale \cdot t + bias$, with t denoting an original time, t' denoting a transformed time, scale denoting a scaling factor, and bias denoting an offset.

**16.** The method of any one of the claims 13-15, further comprising a step of applying the n-1 linear transformations to the corresponding n-1 subintervals of at least one of the calibration peak pattern and the sample peak pattern.

**17.** The method of any one of the claims 13-16, the method comprising the following steps:

determining a first set of linear transformations from the first calibration peak pattern,
determining a second set of linear transformations from the second calibration peak pattern,
deriving, from the first and the second set of linear transformations, an interpolated set of linear transformations,
applying the interpolated set of n-1 linear transformations to the corresponding n-1 subintervals of the sample peak pattern.

**18.** The method of any one of the claims 13-17, further comprising a step of resampling the sampled data values of at least one of the calibration peak pattern and the sample peak pattern by means of linear interpolation in a way that an equidistant spacing between adjacent sampled data values is accomplished.

**19.** A software program or product, preferably stored on a data carrier, adapted to execute the method of any one of the above claims, when run on a data processing system such as a computer.

**20.** A data analysis unit adapted to calibrate a sample peak pattern with regard to a first and a second calibration peak pattern, with the first calibration peak pattern, the sample peak pattern and the second calibration peak pattern being acquired at different times;
with the calibration peak patterns each comprising a first reference peak and at least one second reference peak, and with the sample peak pattern comprising the first reference peak, at least one of the second reference peaks, and any number of peaks of species of interest;
the data analysis unit comprising:

an interpolation unit adapted to align at least one second reference peak of the first calibration peak pattern with at least one corresponding second reference peak of the second calibration peak pattern, and to perform an interpolation of the respective positions of the first reference peak in the first and the second calibration peak pattern, in order to derive a time dependence of the first reference peak's position;
a calibration unit adapted to align the sample peak pattern relative to at least one of the calibration peak patterns in a way that

- the sample peak pattern's first reference peak is aligned with an interpolated position of the first reference peak according to the time dependence determined by the interpolation unit, and that
- at least one of the sample peak pattern's second reference peaks is aligned with at least one corresponding second reference peak of the calibration peak patterns.

21. The data analysis unit of claim 20, further comprising an adjustment unit adapted to derive, from at least one of the first and the second calibration peak pattern, a set of linear transformations, said linear transformations being adapted to perform an adjustment of the peak pattern's time scale in a way that the positions of the reference peaks match with reference positions of the reference peaks specified in a reference data set.

22. A sample analysis unit comprising
a separation flow path adapted to separate compounds of a fluid sample;
a detection unit adapted to determine peak patterns related to the separated compounds,
a data analysis unit according to any one of claims 20 or 21.

23. The sample analysis unit of claim 22, wherein the detection unit is a fluorescence detection unit adapted to detect fluorescence intensity of sample compounds that have been separated in a preceding separation flow path.

24. The sample analysis unit of claim 22 or claim 23, wherein the separation flow path is one of an electrophoresis flow path, a chromatography flow path, an electrochromatography flow path.

**Patentansprüche**

1. Verfahren zum Kalibrieren eines Proben-Peakmusters in Bezug auf ein erstes und ein zweites Kalibrierungs-Peakmuster, bei dem die entsprechenden Peakmuster zu verschiedenen Zeitpunkten gewonnen werden;
wobei die Kalibrierungs-Peakmuster jeweils einen ersten Referenzpeak und mindestens einen zweiten Referenzpeak aufweisen und das Proben-Peakmuster den ersten Referenzpeak, mindestens einen der zweiten Referenzpeaks und eine beliebige Anzahl Peaks von interessierenden Substanzen aufweisen;
wobei das Verfahren die folgenden Schritte aufweist:

(a) Ausrichten mindestens eines zweiten Referenzpeaks des ersten Kalibrierungs-Peakmusters auf mindestens einen entsprechenden zweiten Referenzpeak des zweiten Kalibrierungs-Peakmusters;
(b) Durchführen einer Interpolation der entsprechenden Positionen des ersten Referenzpeaks im ersten und zweiten Kalibrierungs-Peakmuster, um eine zeitliche Abhängigkeit der Position des ersten Referenzpeaks abzuleiten;
(c) Ausrichten des Proben-Peakmusters in Bezug auf mindestens eines der Kalibrierungs-Peakmuster derart, dass

- der erste Referenzpeak des Proben-Peakmusters auf eine interpolierte Position des ersten Referenzpeaks gemäß der in Schritt (b) ermittelten zeitlichen Abhängigkeit ausgerichtet wird, und dass
- mindestens einer der zweiten Referenzpeaks des Proben-Peakmusters auf mindestens einen entsprechenden zweiten Referenzpeak der Kalibrierungs-Peakmuster ausgerichtet wird.

2. Verfahren nach Anspruch 1, bei dem die zeitliche Abhängigkeit der Position des ersten Referenzpeaks durch Ausführen einer linearen Interpolation der entsprechenden Positionen des ersten Referenzpeaks im ersten und zweiten Kalibrierungs-Peakmuster abgeleitet wird.

3. Verfahren nach Anspruch 1 oder 2, bei dem das Proben-Peakmuster durch Nachweisen von Verbindungen eines interessierenden Probe gewonnen wird.

4. Verfahren nach Anspruch 3, bei dem die interessierende Probe eine Markiersubstanz, mindestens ein markiertes Fragment und interessierende Substanzen aufweist, wobei der erste Referenzpeak des Proben-Peakmusters der Markiersubstanz und der mindestens eine zweite Referenzpeak des Proben-Peakmusters dem mindestens einen markierten Fragment entspricht.

5. Verfahren nach einem der obigen Ansprüche, bei dem das erste und das zweite Kalibrierungs-Peakmuster durch Nachweisen von Verbindungen einer Kalibrierungsprobe gewonnen werden.

6. Verfahren nach Anspruch 5, bei dem die Kalibrierungsprobe eine Markiersubstanz und mindestens ein markiertes Fragment aufweist, wobei der entsprechende erste Referenzpeak des ersten und des zweiten Kalibrierungs-Peakmusters der Markierungssubstanz entspricht und der mindestens eine zweite Referenzpeak des ersten und des zweiten Kalibrierungs-Peakmusters dem mindestens einen markierten Fragment entspricht.

7. Verfahren nach Anspruch 5 oder 6, bei dem die Kalibrierungsprobe aus einer Probenreihe mit unterschiedlich markierten Fragmenten besteht.

8. Verfahren nach einem der Unteransprüche 5 bis 7 von Anspruch 3, bei dem die Verbindungen der Kalibrierungsprobe und der interessierenden Probe im Flüssigkeitsstrom einer Trenneinrichtung getrennt werden, wobei die Trenneinrichtung zur Trennung von Verbindungen einer Flüssigkeitsprobe eingerichtet ist.

9. Verfahren nach Anspruch 8, bei dem der Flüssigkeitsstrom der Trenneinrichtung ein Elektrophorese-Flüssigkeitsstrom, ein Chromatographie-Flüssigkeitsstrom und/oder ein Elektrochromatographie-Flüssigkeitsstrom ist.

10. Verfahren nach einem der obigen Ansprüche, bei dem das erste Kalibrierungs-Peakmuster, das Proben-Peakmuster und das zweite Kalibrierungs-Peakmuster durch Nachweisen der Fluoreszenzintensität von Verbindungen gewonnen werden.

11. Verfahren nach Anspruch 4 oder 6, bei dem die Markiersubstanz so beschaffen ist, dass sie Fluoreszenzstrahlung bei einer ersten Wellenlänge emittiert, und die markierten Fragmente so beschaffen sind, dass sie Fluoreszenzstrahlung bei einer zweiten Wellenlänge emittieren.

12. Verfahren nach einem der obigen Ansprüche, bei dem das erste Kalibrierungs-Peakmuster vor des Proben-Peakmusters und das zweite Kalibrierungs-Peakmuster nach des Proben-Peakmusters gewonnen wird.

13. Verfahren nach einem der obigen Ansprüche, das ferner einen Schritt des Ermittelns eines Satzes von linearen Transformationen aus dem ersten und/oder zweiten Kalibrierungs-Peakmuster aufweist, wobei die linearen Transformationen so ausgeführt werden, dass sie eine Justierung der Zeitskala des Peakmusters derart bewirken, dass die Positionen der Referenzpeaks mit den Referenzpositionen der im Referenzdatensatz angegebenen Referenzpeaks zusammenfallen.

14. Verfahren nach Anspruch 13, bei dem die Ermittlung eines Satzes von linearen Transformationen für ein Kalibrierungs-Peakmuster mit n Referenzpeaks, mit n gleich einer natürlichen Zahl, die folgenden Schritte aufweist:

Aufteilen der Zeitachse des Kalibrierungs-Peakmusters in eine Reihe von n-1 benachbarten Teilintervallen, wobei ein i-tes Teilintervall vom Referenzpeak i bis zum Referenzpeak i+1 des Kalibrierungs-Peakmusters reicht und i eine natürliche Zahl $1 \leq i < n$ ist; Erstellen einer entsprechenden linearen Transformation für jedes der n-1 Teilintervalle, wobei die i-te lineare Transformation so ausgeführt wird, dass das i-te Teilintervall einem entsprechenden i-ten Zielintervall zugeordnet wird,

wobei das i-te Zielintervall von der Referenzposition des Referenzpeaks i des Referenzdatensatzes bis zur Referenzposition des Referenzpeaks i+1 des Referenzdatensatzes reicht.

15. Verfahren nach Anspruch 13 oder 14, bei dem eine lineare Transformation derart ausgeführt wird, dass t' = Skalenwert·t + Konstante ist, wobei t eine Zeitspanne, t' eine transformierte Zeitspanne, Maßstab einen Skalierungsfaktor und die Konstante einen Verschiebungswert darstellt.

16. Verfahren nach einem der Ansprüche 13 bis 15, das ferner einen Schritt der Durchführung der n-1 linearen Transformationen mit den entsprechenden n-1 Teilintervallen des Kalibrierungs-Peakmusters und/oder des Proben-Peakmusters aufweist.

17. Verfahren nach einem der Ansprüche 13 bis 16, wobei das Verfahren die folgenden Schritte aufweist:

Ermitteln eines ersten Satzes linearer Transformationen aus dem ersten Kalibrierungs-Peakmuster, Ermitteln eines zweiten Satzes linearer Transformationen aus dem zweiten Kalibrierungs-Peakmuster, Ableiten eines interpolierten Satzes linearer Transformationen aus dem ersten und dem zweiten Satz linearer Transformationen, Anwenden des interpolierten Satzes der n-1 linearen Transformationen auf die entsprechenden n-1 Teilintervalle des Proben-Peakmusters.

18. Verfahren nach einem der Ansprüche 13 bis 17, das ferner einen Schritt der erneuten Auswertung der ausgewerteten Datenwerte des Kalibrierungs-Peakmusters und/oder des Proben-Peakmusters durch lineare Interpolation derart aufweist, dass gleiche Abstände zwischen benachbarten ausgewerteten Datenwerten erreicht werden.

19. Softwareprogramm oder -produkt, das vorzugsweise auf einem Datenträger gespeichert und so beschaffen ist, dass es das Verfahren nach einem der obigen Ansprüche ausführt, wenn es auf einem Datenverarbeitungssystem wie beispielsweise einem Computer läuft.

20. Datenanalyseeinheit, die zum Kalibrieren eines Proben-Peakmusters in Bezug auf ein erstes und ein zweites Kalibrierungs-Peakmuster eingerichtet ist, wobei das erste Kalibrierungs-Peakmuster, das Proben-Peakmuster und das zweite Kalibrierungs-Peakmuster zu verschiedenen Zeitpunkten gewonnen werden;

wobei die Kalibrierungs-Peakmuster jeweils einen ersten Referenzpeak und mindestens einen zweiten Referenzpeak aufweisen und das Proben-Peakmuster den ersten Referenzpeak, mindestens einen der zweiten Referenzpeaks und eine beliebige Anzahl Peaks von interessierenden Substanzen aufweist;

wobei die Datenanalyseeinheit Folgendes aufweist:

eine Interpolationseinheit zum Ausrichten mindestens eines der zweiten Referenzpeaks des ersten Kalibrierungs-Peakmusters auf mindestens einen entsprechenden zweiten Referenzpeak des zweiten Kalibrierungs-Peakmusters und zum Durchführen einer Interpolation der entsprechenden Positionen des ersten Referenzpeaks im ersten und zweiten Kalibrierungs-Peakmuster, um eine zeitliche Abhängigkeit der Position des ersten Referenzpeaks abzuleiten; eine Kalibrierungseinheit zum Ausrichten des Proben-Peakmusters auf mindestens eines der Kalibrierungs-Peakmuster derart, dass

- der erste Referenzpeak des Proben-Peakmusters auf eine interpolierte Position des ersten Referenzpeaks gemäß der durch die Interpolationseinheit ermittelten zeitlichen Abhängigkeit ausgerichtet wird, und dass
- mindestens einer der zweiten Referenzpeaks des Proben-Peakmusters auf mindestens einen entsprechenden zweiten Referenzpeak der Kalibrierungs-Peakmuster ausgerichtet wird.

21. Datenanalyseeinheit nach Anspruch 20, die ferner eine Justierungseinheit zum Ableiten eines Satzes linearer Transformationen von dem ersten und/oder dem zweiten Kalibrierungs-Peakmuster aufweist, wobei die linearen Transformationen so ausgeführt werden, dass sie eine Justierung der Zeitskala des Peakmusters derart bewirken, dass die Positionen der Referenzpeaks mit den Referenzpositionen der im Referenzdatensatz angegebenen Referenzpeaks zusammenfallen.

22. Probenanalyseeinheit, die Folgendes aufweist:

einen Flüssigkeitsstrom einer Trenneinrichtung zur Trennung von Verbindungen einer Flüssigkeitsprobe; eine Nachweiseinheit zum Ermitteln von Peakmustern der getrennten Verbindungen; eine Datenanalyseeinheit nach einem der Ansprüche 20 oder 21.

23. Probenanalyseeinheit nach Anspruch 22, bei der die Nachweiseinheit eine Fluoreszenznachweiseinheit zum Nachweisen der Fluoreszenzintensität von einfachen Verbindungen ist, die vorher in einem Flüssigkeitsstrom einer Trenneinrichtung getrennt worden sind.

24. Probenanalyseeinheit nach Anspruch 22 oder Anspruch 23, bei welcher der Flüssigkeitsstrom der Trenneinrichtung ein Elektrophorese-Flüssigkeitsstrom, ein Chromatographie-Flüssigkeitsstrom und/oder ein Elektrochromatographie-Flüssigkeitsstrom ist.

## Revendications

1. Procédé d'étalonnage d'une structure en pic d'échantillon par rapport à une première et une deuxième structures en pics d'étalonnage, dans lequel les structures en pics respectives sont acquises à différents moments,

les structures en pics d'étalonnage comprenant chacune un premier pic de référence et au moins un deuxième pic de référence, et la structure en pic d'échantillon comprenant le premier pic de référence, au moins l'un des deuxièmes pics de référence, et un nombre quelconque de pics d'espèces intéressantes,

le procédé comprenant les étapes suivantes :

(a) alignement d'au moins un deuxième pic de référence de la première structure en pic d'étalonnage sur au moins un deuxième pic de référence correspondant de la deuxième structure en pic d'étalonnage,
(b) réalisation d'une interpolation des positions respectives du premier pic de référence dans la première et la deuxième structures en pic d'étalonnage, afin de dériver une dépendance temporelle de la position du premier pic de référence,
(c) alignement de la structure en pic d'échantillon sur au moins une des structures en pics d'étalonnage de manière à ce que

- le premier pic de référence de la structure en pic d'échantillon soit aligné sur une position interpolée du premier pic de référence selon la dépendance temporelle déterminée à l'étape (b), et à ce que
- au moins un des deuxièmes pics de référence de la structure en pic d'échantillon soit aligné sur au moins un deuxième pic de référence correspondant des structures en pics d'étalonnage.

2. Procédé selon la revendication 1, dans lequel la dépendance temporelle de la position du premier pic de référence est dérivée par interpolation linéaire des positions respectives du premier pic de référence dans la première et la deuxième structures en pics d'étalonnage.

3. Procédé selon la revendication 1 ou 2, dans lequel la structure en pic d'échantillon est acquise par détection des composants d'un échantillon intéressant.

4. Procédé selon la revendication 3, dans lequel l'échantillon intéressant comprend un marqueur, au moins un fragment marqué, et des espèces intéressantes, dans lequel le premier pic de référence de la structure en pic d'échantillon correspond au marqueur, et dans lequel au moins un deuxième pic de référence de la structure en pic d'échantillon correspond à au moins un fragment marqué.

5. Procédé selon l'une quelconque des revendications précédentes, dans lequel la première et la deuxième structures en pics d'échantillon sont acquises par détection des composants d'un échantillon d'étalonnage.

6. Procédé selon la revendication 5, dans lequel l'échantillon d'étalonnage comprend un marqueur et au moins un fragment marqué, dans lequel le premier pic de référence respectif de la première et de la deuxième structures en pics d'étalonnage correspond au marqueur, et dans lequel au moins un deuxième pic de référence de la première et de la deuxième structures en pics d'étalonnage correspond à au moins un fragment marqué.

7. Procédé selon la revendication 5 ou 6, dans lequel l'échantillon d'étalonnage est une échelle comprenant un ensemble de fragments marqués différents.

8. Procédé selon l'une quelconque des revendications 5 à 7 telles que dépendantes de la revendication 3, dans lequel les composants de l'échantillon d'étalonnage et de l'échantillon intéressant sont séparés en une trajectoire de séparation, la trajectoire de séparation étant adaptée pour séparer des composants d'un échantillon fluide.

9. Procédé selon la revendication 8, dans lequel la trajectoire de séparation est l'une d'une trajectoire d'électrophorèse, une trajectoire de chromatographie, une trajectoire d'électro-chromatographie.

10. Procédé selon l'une quelconque des revendications précédentes, dans lequel la première structure en pic d'étalonnage, la structure en pic d'échantillon et la deuxième structure en pic d'étalonnage sont acquises par détection une intensité de fluorescence de composants.

11. Procédé selon la revendication 4 ou 6, dans lequel le marqueur est adapté pour émettre une lumière fluorescente à une première longueur d'onde, et dans lequel les fragments marqués sont adaptés pour émettre une lumière fluorescente à une deuxième longueur d'onde.

12. Procédé selon l'une quelconque des revendications précédentes, dans lequel la première structure en pic d'étalonnage est acquise avant la structure en pic d'échantillon, et dans lequel la deuxième structure en pic d'étalonnage est acquise après la structure en pic d'échantillon.

13. Procédé selon l'une quelconque des revendications précédentes, comprenant en outre une étape de détermination, à partir d'au moins une de la première et la deuxième structures en pics d'étalonnage, d'un ensemble de transformations linéaires, lesdites transformations linéaires étant adaptées pour réaliser un ajustement de l'échelle de temps de la structure en pic de manière à ce que les positions des pics de référence correspondent aux positions de référence des pics de référence précisées dans un ensemble de données de référence.

14. Procédé selon la revendication 13, dans lequel, dans le cas d'une structure en pic d'étalonnage comprenant n pics de référence, n étant un entier naturel, la détermination de l'ensemble de transformations linéaires comprend les étapes suivantes :

division de l'axe de temps de la structure en pic d'étalonnage en une série de n-1 sous-intervalles adjacents, avec un $i^{\text{ème}}$ sous-intervalle se situant entre le pic de référence i et le pic de référence i+1 de la structure en pic d'étalonnage, i étant un entier naturel, $1 \leq i \leq n$, détermination, pour chacun des n-1 sous-intervalles, d'une transformation linéaire correspondante, la $i^{\text{ème}}$ transformation linéaire étant adaptée pour établir une carte du $i^{\text{ème}}$ sous-intervalle en un $i^{\text{ème}}$ intervalle cible correspondant, ledit $i^{\text{ème}}$ intervalle cible se situant entre la position de référence du pic de référence i de l'ensemble de données de référence et la position de référence du pic de référence i+1 de l'ensemble de données de référence.

15. Procédé selon la revendication 13 ou 14, dans lequel une transformation linéaire est définie en tant que t' = échelle x t + biais, t désignant un temps d'origine, t' désignant un temps transformé, échelle désignant un facteur de démultiplication, et biais désignant un décalage.

16. Procédé selon l'une quelconque des revendications 13 à 15, comprenant en outre une étape d'application des n-1 transformations linéaires aux n-1 sous-intervalles correspondant d'au moins une de la structure en pic d'étalonnage et la structure en pic d'échantillon.

**17.** Procédé selon l'une quelconque des revendications 13 à 16, comprenant les étapes suivantes :

détermination d'un premier ensemble de transformations linéaires à partir de la première structure en pic d'étalonnage,
détermination d'un deuxième ensemble de transformations linéaires à partir de la deuxième structure en pic d'étalonnage,
dérivation, à partir du premier et du deuxième ensembles de transformations linéaires, d'un ensemble interpolé de transformations linéaires,
application de l'ensemble interpolé de n-1 transformations linéaires aux n-1 sous-intervalles correspondants de la structure en pic d'échantillon.

**18.** Procédé selon l'une quelconque des revendications 13 à 17, comprenant en outre une étape de ré-échantillonnage des valeurs de données échantillonnées d'au moins une de la structure en pic d'étalonnage et la structure en pic d'échantillon au moyen d'une interpolation linéaire, de manière à ce qu'un espace équidistant entre des valeurs de données échantillonnées adjacentes soit atteint.

**19.** Programme ou produit logiciel, de préférence stocké sur un support de données, adapté pour exécuter le procédé selon l'une quelconque des revendications précédentes, lorsqu'il est exécuté sur un système de traitement de données tel qu'un ordinateur.

**20.** Unité d'analyse de données adaptée pour étalonner une structure en pic d'échantillon par rapport à une première et une deuxième structures en pics d'étalonnage, la première structure en pic d'étalonnage, la structure en pic d'échantillon et la deuxième structure en pic d'étalonnage étant acquises à différents moments,
les structures en pics d'étalonnage comprenant chacune un premier pic de référence et au moins un deuxième pic de référence, et la structure en pic d'échantillon comprenant le premier pic de référence, au moins un des deuxièmes pics de référence et un nombre quelconque de pics d'espèces intéressantes,
l'unité d'analyse de données comprenant :

une unité d'interpolation adaptée pour aligner au moins un deuxième pic de référence de la première structure en pic d'étalonnage sur au moins un deuxième pic de référence correspondant de la deuxième structure en pic d'étalonnage, et pour réaliser une interpolation des positions respectives du premier pic de référence dans la première et la deuxième structures en pics d'étalonnage, afin de dériver une dépendance temporelle de la position du premier pic de référence,
une unité d'étalonnage adaptée pour aligner la structure en pic d'échantillon sur au moins une des structures en pics d'étalonnage de manière à ce que

- le premier pic de référence de la structure en pic d'échantillon soit aligné sur une position interpolée du premier pic de référence selon la dépendance temporelle déterminée par l'unité d'interpolation, et à ce que
- au moins un des deuxièmes pics de référence de la structure en pic d'échantillon soit aligné sur au moins un deuxième pic de référence correspondant des structures en pics d'étalonnage.

**21.** Unité d'analyse de données selon la revendication 20, comprenant en outre une unité d'ajustement adaptée pour dériver, à partir d'au moins une de la première et la deuxième structures en pics d'étalonnage, un ensemble de transformations linéaires, lesdites transformations linéaires étant adaptées pour réaliser un ajustement de l'échelle de temps de la structure en pic de manière à ce que les positions des pics de référence correspondent aux positions de référence des pics de référence précisées dans un ensemble de données de référence.

**22.** Unité d'analyse d'échantillon comprenant :

une trajectoire de séparation adaptée pour séparer des composants d'un échantillon fluide,
une unité de détection adaptée pour déterminer des structures en pics relatives aux composants séparés,
une unité d'analyse de données selon l'une quelconque des revendications 20 ou 21.

**23.** Unité d'analyse d'échantillon selon la revendication 22, dans laquelle l'unité de détection est une unité de détection de fluorescence adaptée pour détecter l'intensité de fluorescence de composants d'échantillon qui ont été séparés dans une trajectoire de séparation précédente.

**24.** Unité d'analyse d'échantillon selon la revendication 22 ou la revendication 23, dans laquelle la trajectoire de séparation est une trajectoire d'électrophorèse, une trajectoire de chromatographie ou une trajectoire d'électro-chromatographie.

Fig.1

Fig.2

Fig.3

Fig. 4A

Fig. 4B

Fig. 4C

Fig. 5

Fig. 6A

Fig. 6B

Fig. 6C

EP 1 600 771 B1

Fig. 7

EP 1 600 771 B1